(19) **Europäisches Patentamt / European Patent Office / Office européen des brevets**

(11) **EP 2 137 233 B1**

(12) **EUROPÄISCHE PATENTSCHRIFT**

(45) Veröffentlichungstag und Bekanntmachung des Hinweises auf die Patenterteilung:
**26.01.2011 Patentblatt 2011/04**

(21) Anmeldenummer: **07856491.1**

(22) Anmeldetag: **08.12.2007**

(51) Int Cl.:
*C08G 65/00* (2006.01)    *C08G 65/26* (2006.01)

(86) Internationale Anmeldenummer:
**PCT/EP2007/010715**

(87) Internationale Veröffentlichungsnummer:
**WO 2008/089820 (31.07.2008 Gazette 2008/31)**

(54) **VERFAHREN UND VORRICHTUNG ZUR HERSTELLUNG VON ALKYLENOXIDANLAGERUNGSPRODUKTEN**

METHOD AND DEVICE FOR THE PRODUCTION OF ALKYLENE OXIDE ADDITION PRODUCTS

PROCÉDÉ ET DISPOSITIF DE PRÉPARATION DE PRODUITS D'ADDITION D'OXYDES D'ALKYLÈNE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **24.01.2007 DE 102007003500**

(43) Veröffentlichungstag der Anmeldung:
**30.12.2009 Patentblatt 2009/53**

(73) Patentinhaber: **Cognis IP Management GmbH 40589 Düsseldorf (DE)**

(72) Erfinder:
• **FRANZEN, Stefan 59174 Kamen (DE)**
• **KOELKER, Thomas 40597 Düsseldorf (DE)**

(56) Entgegenhaltungen:
**EP-A- 0 419 419    WO-A-98/17381**

**Beschreibung**

**Gebiet der Erfindung**

Die Erfindung befindet sich auf dem Gebiet der Alkoxylierung und betrifft ein neues Verfahren sowie eine zugehörige Vorrichtung zur Herstellung von Alkylenoxidanlagerungsprodukten.

**Stand der Technik**

Anlagerungsprodukte von Alkylenoxiden an Alkohole, Säuren oder Amine stellen wichtige technische Produkte dar, die vielfache Anwendung insbesondere als nichtionische Tenside finden.

Die Alkoxylierung wird üblicherweise diskontinuierlich, beispielsweise in Rührautoklaven oder Schlaufenreaktoren bei Temperaturen zwischen 80 und 200 °C durchgeführt; alternativ kann auch eine Dispersion der flüssigen Reaktionsmischung in eine alkylenoxidhaltige Gasphase erfolgen. Beispielhaft sei dazu auf einen Übersichtsartikel in Ind. Eng. Chem. Res. 25, 9482-9489 (2005) verwiesen. Typischerweise wird eine Verbindung mit dem nucleophilen Zentrum - beispielsweise ein Alkohol, eine Carbonsäure, ein Ester oder ein Amin - zusammen mit dem Katalysator vorgelegt und dann die gewünschte Menge an Alkylenoxid aufgepresst, wobei sich in der Regel abhängig von der Temperatur ein Druck von bis zu 12 bar einstellt. Als Katalysatoren eignen sich basische Verbindungen, wie beispielsweise Alkalialkoholate, oder Lewis-Säuren, wobei letztere den Nachteil aufweisen, dass sie zur Bildung erheblicher Mengen unerwünschter Polyglykolether tendieren. Bei all diesen Prozessen sind eine flüssige Reaktionsmischung und eine alkylenoxidhaltige Gasphase beteiligt, was generisch mit dem Problem des unzureichenden Stofftransports an der Phasengrenzfläche und daher vermindertem Umsatz behaftet ist.

Aus dem Stand der Technik sind unterschiedliche Verfahren bekannt, um diese Alkylenoxidanlagerungsprodukte herzustellen. Stellvertretend sei hier nur auf die folgenden Druckschriften verwiesen, die jede für sich spezielle konstruktive Ausgestaltungsformen für Alkoxylierungsreaktoren offenbaren: EP 0853975 A1 (CP Tech), US 5,811,595 (Ellis), US 6,180,728 (Linde), US 6,342.199 (Ellis), US 6,673,972 (BASF), US 6,838,061 (BASF), US 2005/0107643 A1 (BASF),

In der Praxis häufig anzutreffen sind diskontinuierliche oder halbkontinuierliche Verfahren, die in Rührreaktoren durchgeführt werden. Nachteilig ist dabei der geringe Stoffaustausch, da die Alkylenoxide in der flüssigen Phase auch bei hohem Eintrag von Rührenergie nur sehr langsam reagieren. Als Folge der geringen Reaktionsgeschwindigkeit akkumuliert das Alkylenoxid unter bestimmten Bedingungen. Diese Akkumulation kann zu sicherheitskritischen Runawayreaktionen führten. Weiterhin führt dieser Zusammenhang naturgemäß zu langen Reaktionszeiten, die aus ökonomischen Gründen unerwünscht sind; zudem kann es zu einer Farbverschlechterung der Produkte kommen.

Aus dem Stand der Technik ist zudem der so genannte "*Venturi Loop Reactor*" bekannt, der im Wesentlichen aus einem Reaktor mit einer innen befindlichen Drossel *("Venturidüse")* besteht. Die Ausgangsstoffe werden am Reaktorkopf in die Venturidüse eindosiert, verdüst und bilden dann eine flüssige Phase im Reaktor, die über ein Bodenablassventil in eine außen liegende Leitung ("Loop") gelangt und dann im Kreis zum Reaktorkopf geführt wird. Die Alkylenoxide werden flüssig vor der Venturidüse eindosiert. Zusätzlich werden Ethylenoxiddämpfe aus der Gasphase in die Venturidüse eingesaugt, so dass es hier zu einer besonders intensiven Vermischung kommt [vgl. EP 0070797 A1, EP 0419419 B1, US 5,159,092, Buss]. Von Nachteil ist jedoch, dass auf diese Weise die Dimensionierung des Reaktors durch die Größe der Venturidüse festgelegt ist und ein bestimmtes Maß auf Grund der hydrodynamischen Bedingungen nicht unterschritten werden kann. Zudem sind die Umsätze im Vergleich zum Rührreaktor zwar besser, aber längst noch nicht wirklich befriedigend. Des Weiteren setzt dieser Reaktortyp einen außen liegenden Kreislauf voraus, was eine Mindestrohstoffmenge erforderlich macht. Die Herstellung kleiner Produktmengen oder von Produkten mit hohen Wachstumsraten, wie es für Spezialchemikalien typisch ist, lässt sich so nicht realisieren. Dies wird deutlich, wenn man sich die so genannte Wachstumsrate bei der Herstellung der Alkylenoxidanlagerungsprodukte ansieht, die wie folgt definiert ist:

$$\text{Wachstumsrate W} = \frac{\text{Volumen der Reaktionsprodukte [m}^3\text{]}}{\text{Startvolumen Ausgangsstoffe [m}^3\text{]}}$$

Bei Einsatz des Venturi Loop Reaktor ist eine Wachstumsrate zwischen 2 und 12 möglich, ein wirklich flexibler Reaktor, der die Herstellung auch kleiner Produktmengen ermöglicht, müsste jedoch eine Wachstumsrate von wenigstens 25, besser 40 bis 50 aufweisen.

Die Aufgabe der vorliegenden Erfindung hat folglich darin bestanden, ein Verfahren und eine Vorrichtung zur Herstellung von Alkylenoxidanlagerungsprodukten zur Verfügung zu stellen, die einerseits im Vergleich mit dem Stand der Technik eine höhere Flexibilität aufweist und Wachstumsraten größer 40, vorzugsweise größer 50 möglich macht, und zum anderen innerhalb kürzerer Reaktionszeiten höhere Umsätze erzielt, ohne dass die Produktqualität, insbesondere die Farbe, darunter leidet.

## Beschreibung der Erfidung

Gegenstand der Erfindung ist ein Verfahren zur Herstellung von Alkylenoxidanlagerungsprodukten, welches sich dadurch auszeichnet, dass man

(i) eine zur Anlagerung bzw. Insertion von Alkylenoxiden befähigte Ausgangsverbindung in einem Rührreaktor vorlegt, diese von mindestens einem Alkylenoxid durchströmen lässt, wobei ein Teil des Alkylenoxids in der flüssigen Phase mit der Ausgangsverbindung abreagiert und die verbleibende Menge an Alkylenoxid gemeinsam mit dem zur Phlegmatisierung eingesetzten Gas eine Gasphase oberhalb der Flüssigphase bildet,

(ii) die flüssige Phase am Boden des Reaktors über einen Auslassstutzen kontinuierlich abzieht und über einen außen liegenden Kreislauf zum Kopf des Reaktors zurückführt, wobei in den Kreislauf mindestens ein Wärmetauscher und mindestens eine Venturidüse geschaltet werden, und

(iii) die Gasphase des Rührreaktors, welche die noch nicht umgesetzten Alkylenoxide enthält, über eine Saugleitung in die Venturidüse eindosiert wird.

Durch die Kombination eines klassischen Rührreaktors mit außen liegendem Kreislauf und einer Venturidüse, die sich im Außenkreislauf und nicht im Reaktor befindet, wird ein neuer Reaktor erhalten, der sich durch hohe Flexibilität auszeichnet. Nicht nur, dass die unterschiedlichsten Ausgangsprodukte eingesetzt werden können, es ist insbesondere auch möglich, hohe Wachstumsraten von mehr als 40 und insbesondere mehr als 50 zu erzielen und auf diese Weise auch Spezialprodukte in kleinen Volumina herzustellen. Auf diese Weise macht man sich zum einen die Vorteile der Venturidüse zu Nutze, die in einem besonders intensiven Stoffaustausch besteht, ohne gleichzeitig in der Dimensionierung und Ausstattung des Reaktors beschränkt zu sein. Gleichzeitig werden mit dem Verfahren in kürzerer Zeit höhere Ausbeuten erzielt, ohne dass die Farbqualität der Produkte darunter leidet.

## Ausgangsstoffe

Die Auswahl der geeigneten Ausgangsstoffe ist an sich unkritisch, da ein besonderes Merkmal des erfindungsgemäßen Verfahrens gerade darin besteht, die unterschiedlichsten Einsatzstoffe zu alkoxylieren. Typische Beispiele für zur Anlagerung bzw. Insertion von Alkylenoxiden befähigte Ausgangsverbindungen sind Alkohole, Carbonsäuren, Carbonsäurealkylester, Carbonsäurepolyolester und Amine.

Bevorzugte Einsatzstoffe sind indes Alkohole der Formel **(I)**,

$$R^1OH \qquad (I)$$

in der $R^1$ für einen linearen oder verzweigten Kohlenwasserstoffrest mit 1 bis 22, vorzugsweise 8 bis 18 Kohlenstoffatomen und 0 oder 1 bis 3 Doppelbindungen steht. Typische Beispiele sind neben den niederen aliphatischen Alkoholen Methanol, Ethanol sowie den isomeren Butanolen und Pentanolen die Fettalkohole, nämlich Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Linolylalkohol, Linolenylalkohol, Elaeostearylalkohol, Arachylalkohol, Gadoleylalkohol, Behenylalkohol, Erucylalkohol und Brassidylalkohol sowie deren technische Mischungen, die z.B. bei der Hochdruckhydrierung von technischen Methylestern auf Basis von Fetten und Ölen oder Aldehyden aus der Roelen'schen Oxosynthese sowie als Monomerfraktion bei der Dimerisierung von ungesättigten Fettalkoholen anfallen. Bevorzugt sind technische Fettalkohole mit 12 bis 18 Kohlenstoffatomen, wie beispielsweise Kokos-, Palm-, Palmkern- oder Talgfettalkohol.

Eine weitere Gruppe von Verbindungen, die sich als Ausgangsstoffe für die Alkoxylierung eignen, bilden die Carbonsäuren der Formel **(II)**,

$$R^2CO\text{-}OH \qquad (II)$$

in der $R^2CO$ für einen linearen oder verzweigten Acylrest mit 1 bis 22 Kohlenstoffatomen und 0 oder 1 bis 3 Doppelbindungen steht. Typische Beispiele sind vor allem die Fettsäuren, nämlich Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen, die z.B. bei der Druckspaltung von natürlichen Fetten und Ölen, bei der Reduktion von Aldehyden aus der Roelen'schen Oxosynthese oder der Dimerisierung von ungesättigten Fettsäuren anfallen. Bevorzugt sind technische Fettsäuren mit 12 bis 18 Kohlenstoffatomen wie beispielsweise Kokos-, Palm-, Palmkern- oder Talgfettsäure. Selbstverständlich können auch funktionalisierte Carbonsäuren, z.B. Hydroxycarbonsäuren wie die Ricinolsäure oder die Zitronensäure oder Dicarbonsäuren wie die Adipinsäure alkoxyliert werden. Anstelle der Säuren können auch die entsprechenden Ester mit $C_1$-$C_{22}$ Alkoholen oder Glycerin eingesetzt werden; hier findet dann eine Insertion in die Estergruppe statt.

Anstelle der Carbonsäuren können deren Ester mit Alkoholen mit 1 bis 22 und vorzugsweise 1 bis 4 Kohlenstoffatomen oder Polyolen, speziell Glycerin, Trimethylolpropan oder Pentaerythrit eingesetzt werden. Neben den entsprechenden Carbonsäuremethylester sind die Glyceride und darunter wieder die Partialglyceride bevorzugt. Sofern es sich um Vollester handelt, erfolgt ein Einschub der Alkylenoxidgruppen in die Carbonylesterbindung.

Schließlich eignen sich als weitere Gruppe von Verbindungen auch Amine der Formel **(III)** als Ausgangsstoffe,

$$R^2\text{-NH-}R^4 \qquad\qquad (III)$$

in der $R^3$ und $R^4$ unabhängig voneinander für Wasserstoff, Alkylgruppen mit 1 bis 18 Kohlenstoffatomen oder Hydroxyalkylgruppen mit 1 bis 4 Kohlenstoffatomen stehen. Typische Beispiele sind Methylamin, Dimethylamin, Ethylamin, Diethylamin, Methylethylamin sowie die verschiedenen analog aufgebauten Propyl-, Butyl-, Pentyl- und Fettamine.

Alkylenoxide

Als Alkylenoxide kommen Ethylenoxid, Propylenoxid, Butylenoxid oder deren Gemische in Frage.

Durchführung des Verfahrens

Die Bedingungen unter denen die Alkoxylierung durchgeführt wird, entsprechen denen, die aus dem Stand der Technik hinreichend bekannt sind. Die Reaktionstemperatur kann dabei in Abhängigkeit vom Einsatzmaterial zwischen 50 und 200 °C variieren und liegt vorzugsweise bei 100 bis 170 °C, während der Druck 1 bis 12, vorzugsweise 2 bis 5 bar betragen kann. Zur Phlegmatisierung der Gasphase, die sich oberhalb des Reaktionsgemisches bildet, werden inerte Gase wie beispielsweise Stickstoff oder Kohlendioxid eingesetzt. Die Alkoxylierung findet vorzugsweise in Gegenwart von Katalysatoren statt, die homogener oder heterogener Natur sein können; dazu werden die Katalysatoren üblicherweise in den Ausgangssubstanzen gelöst oder dispergiert. Als geeignete homogene Katalysatoren seien beispielhaft Alkalihydroxide oder Alkalialkoholate, speziell Kaliumhydroxid, Kalium-tert-butylat und insbesondere Natriummethylat genannt. In der Regel setzt man als Alkylenoxide Ethylen- und/oder Propylenoxid ein, wobei das molare Verhältnis zwischen den Alkylenoxiden und den Ausgangsstoffen für die Alkoxylierung 1:1 bis 200:1, vorzugsweise 1:1 bis 50:1 und insbesondere 1:1 bis 20:1 betragen kann.

Zur Durchführung des Verfahrens wird der Rührreaktor zunächst mit der Ausgangsverbindung befüllt und intertisiert, d.h. durch abwechselndes Anlegen von Vakuum und Spülen mit Stickstoff werden Luft und Spuren von Wasser entfernt. Nachdem der Reaktor durch die Außenheizung die gewünschte Temperatur erreicht, wird das Alkylenoxid durch im Boden befindliche Düsen eindosiert. In der flüssigen Phase erfolgt durch den Eintrag von Rührenergie eine Durchmischung, bei der etwa 3 bis 5 Vol.-% des Alkylenoxids abreagieren, die restliche Menge bildet über der Flüssigkeit mit dem Gas, das zur Phlegmatisierung aufgedrückt wird, eine Gasphase. Nachdem ein Mindestumsatz von etwa 5 bis 10 % der Theorie erreicht worden ist, wird das Ablassventil am Boden des Reaktors geöffnet und die flüssige Phase im Kreis gepumpt und wieder am Kopf des Reaktors aufgegeben. In diesem Kreislauf befinden sich mindestens ein Wärmetauscher und mindestens eine Venturidüse (in der Literatur häufig auch als Venturijet bezeichnet). Hierbei handelt es sich um ein dem Fachmann geläufiges Bauteil, nämlich eine Drosselvorrichtung mit geringem Druckverlust, bei der die in kinetische Energie umgesetzte Druckenergie abgeleitet wird und die aus zwei Teilen besteht, nämlich der Mischkammer und dem Diffusor. Die Venturidüse hat die Aufgabe, eine besonders innige Durchmischung zwischen den flüssigen Ausgangsverbindungen und dem darin gelösten Alkylenoxid herzustellen. Dazu besteht die besondere Ausgestaltung des Verfahrens darin, dass über eine Saugleitung Alkylenoxid aus der Gasphase des Rührreaktors in die Mischkammer der Venturidüse eindosiert wird, so dass an dieser Stelle eine weitere, besonders intensive Durchmischung der Reaktionspartner stattfindet, was zu einer signifikanten Umsatzsteigerung und zu einer drastischen Verkürzung der Reaktionszeit führt. Je nach Bedarf, kann man in den außen liegenden Kreislauf einen Wärmetauscher vor oder hinter die Venturidüse schalten.

**Reaktor**

Ein weiterer Gegenstand der vorliegenden Erfindung betrifft eine Vorrichtung zur Herstellung von Alkylenoxidanlagerungsprodukten, welche die folgenden Bestandteile aufweist:

(i) einem Rührreaktor (1) ausgestattet mit einer Rührvorrichtung (1a), Dosiervorrichtungen für flüssige oder gasförmige Reaktionsprodukte (1b) sowie einem Ablassstutzen (1c),

(ii) einem mit dem Rührreaktor (1) verbundenen außen liegenden Kreislauf zum Umpumpen des flüssigen Reaktionsgemisches (2) ausgestattet mit einer Pumpe (2a), mindestens einem Wärmetauscher (2b) und mindestens einer Venturidüse (2c), sowie

(iii) einer Saugleitung (3), mit deren Hilfe die Gasphase aus dem Rührreaktor (1) in die Mischvorrichtung der Venturidüse (2c) eindosiert wird.

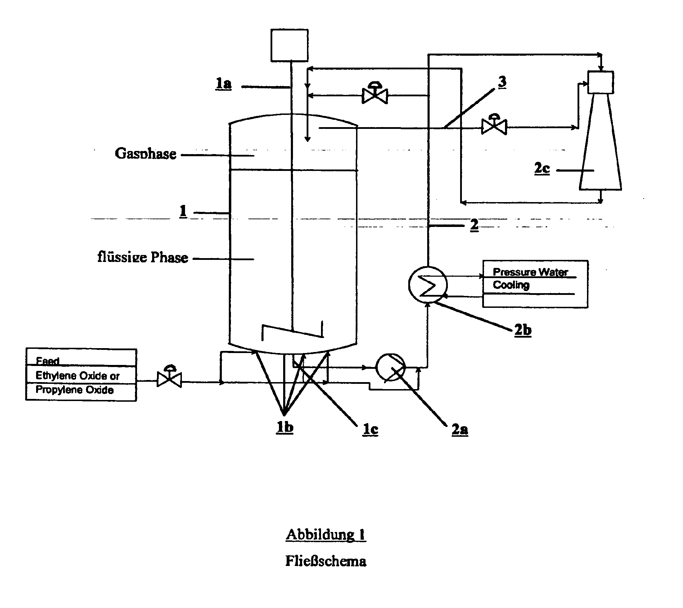

Die Vorrichtung nebst den Indexen wird in der nachfolgenden Abbildung 1 näher erläutert.

**Gewerbliche Anwendbarkeit**

Verfahren und Vorrichtung weisen den Vorteil hoher Flexibilität auf und ermöglichen es, unterschiedlichste Alkylenoxidanlagerungsprodukte in unterschiedlichsten Volumina in hohen Ausbeuten bei gegenüber dem Stand der Technik deutlich verkürzten Reaktionszeiten herzustellen.

**Patentansprüche**

1. Verfahren zur Herstellung von Alkylenoxidanlagerungsprodukten, **dadurch gekennzeichnet, dass** man

(i) eine zur Anlagerung bzw. Insertion von Alkylenoxiden befähigte Ausgangsverbindung in einem Rührreaktor vorlegt, diese von mindestens einem Alkylenoxid durchströmen lässt, wobei ein Teil des Alkylenoxids in der flüssigen Phase mit der Ausgangsverbindung abreagiert und die verbleibende Menge an Alkylenoxid gemeinsam mit dem zur Phlegmatisierung eingesetzten Gas eine Gasphase oberhalb der Flüssigphase bildet,
(ii) die flüssige Phase am Boden des Reaktors über einen Auslassstutzen kontinuierlich abzieht und über einen außen liegenden Kreislauf zum Kopf des Reaktors zurückführt, wobei in den Kreislauf mindestens ein Wärmetauscher und mindestens eine Venturidüse geschaltet werden, und
(iii) die Gasphase des Rührreaktors, welche die noch nicht umgesetzten Alkylenoxide enthält, über eine Saugleitung in die Venturidüse eindosiert wird.

2. Verfahren nach Anspruch 1, **dadurch gekennzeichnet, dass** man zur Anlagerung bzw. Insertion von Alkylenoxiden befähigte Ausgangsverbindungen einsetzt, die ausgewählt sind aus der Gruppe der Alkohole, Carbonsäuren, Carbonsäurealkylester, Carbonsäurepolyolester und Amine.

3. Verfahren nach den Ansprüchen 1 und/oder 2, **dadurch gekennzeichnet, dass** man als Alkylenoxide Ethylenoxid, Propylenoxid, Butylenoxid oder deren Gemische einsetzt.

4. Verfahren nach mindestens einem der Ansprüche 1 bis 3, **dadurch gekennzeichnet, dass** man die Reaktion bei Temperaturen im Bereich von 50 bis 200 °C durchführt.

5. Verfahren nach mindestens einem der Ansprüche 1 bis 4, **dadurch gekennzeichnet, dass** man die Reaktion bei Drücken im Bereich von 1 bis 12 bar durchführt.

6. Verfahren nach mindestens einem der Ansprüche 1 bis 5, **dadurch gekennzeichnet, dass** man einen Alkoxylierungskatalysator in den Ausgangssubstanzen löst oder dispergiert.

7. Verfahren nach mindestens einem der Ansprüche 1 bis 6, **dadurch gekennzeichnet, dass** man in den außen liegenden Kreislauf einen Wärmetauscher vor die Venturidüse schaltet.

8. Verfahren nach mindestens einem der Ansprüche 1 bis 6, **dadurch gekennzeichnet, dass** man in den außen liegenden Kreislauf eine Venturidüse hinter oder vor den Wärmetauscher schaltet.

9. Vorrichtung zur Herstellung von Alkylenoxidanlagerungsprodukten bestehend aus

(i) einem Rührreaktor (1) ausgestattet mit einer Rührvorrichtung (1a), Dosiervorrichtungen für flüssige oder gasförmige Reaktionsprodukte (1b) sowie einem Ablassstutzen (1c),

(ii) einem mit dem Rührreaktor (1) verbundenen außen liegenden Kreislauf zum Umpumpen des flüssigen Reaktionsgemisches (2), ausgestattet mit einer Pumpe (2a), mindestens einem Wärmetauscher (2b) und mindestens einer Venturidüse (2c), sowie

(iii) einer Saugleitung (3) mit deren Hilfe die Gasphase aus dem Rührreaktor (1) in die Mischvorrichtung der Venturidüse (2c) eindosiert wird.

**Claims**

1. A process for preparing alkylene oxide addition products, **characterized in that**

   (i) a starting compound capable of adding on or inserting alkylene oxides is initially charged in a stirred reactor through which at least one alkylene oxide is allowed to flow, which reacts a portion of the alkylene oxide in the liquid phase with the starting compound, and the remaining amount of alkylene oxide together with the gas used for phlegmatization forms a gas phase above the liquid phase,
   (ii) the liquid phase is drawn off continuously at the bottom of the reactor via an outlet stub and is recycled to the top of the reactor via an external circulation system, at least one heat exchanger and at least one Venturi nozzle being connected within the circulation system, and
   (iii) the gas phase of the stirred reactor which comprises the as yet unconverted alkylene oxides is metered into the Venturi nozzle via a suction line.

2. The process according to claim 1, **characterized in that** the starting compounds capable of adding on or inserting alkylene oxides used are selected from the group of the alcohols, carboxylic acids, alkyl carboxylates, polyol carboxylates and amines.

3. The process as claimed in claims 1 and/or 2, **characterized in that** the alkylene oxides used are ethylene oxide, propylene oxide, butylene oxide or mixtures thereof.

4. The process as claimed in at least one of claims 1 to 3, **characterized in that** the reaction is performed at temperatures in the range from 50 to 200°C.

5. The process as claimed in at least one of claims 1 to 4, **characterized in that** the reaction is performed at pressures in the range from 1 to 12 bar.

6. The process as claimed in at least one of claims 1 to 5, **characterized in that** an alkoxylation catalyst is dissolved or dispersed in the starting substances.

7. The process as claimed in at least one of claims 1 to 6, **characterized in that** a heat exchanger is connected upstream of the Venturi nozzle in the external circulation system.

8. The process as claimed in at least one of claims 1 to 6, **characterized in that** a Venturi nozzle is connected downstream or upstream of the heat exchanger in the external circulation system.

9. An apparatus for preparing alkylene oxide addition products, consisting of

   (i) a stirred reactor (1) equipped with a stirrer apparatus (1a), metering apparatus for liquid or gaseous reaction products (1b) and a discharge stub (1c),
   (ii) an external circulation system connected to the stirred reactor (1) for pumped circulation of the liquid reaction mixture (2), equipped with a pump (2a), at least one heat exchanger (2b) and at least one Venturi nozzle (2c), and
   (iii) a suction line (3), with the aid of which the gas phase from the stirred reactor (1) is metered into the mixing apparatus of the Venturi nozzle (2c).

**Revendications**

1. Procédé pour la préparation de produits d'addition d'oxydes d'alkylène, **caractérisé en ce qu'**on

(i) dispose au préalable un composé de départ apte à l'addition ou à l'insertion d'oxydes d'alkylène dans un réacteur agité, on laisse s'écouler au moins un oxyde d'alkylène au travers de celui-ci, une partie de l'oxyde d'alkylène réagissant dans la phase liquide avec le composé de départ et la quantité résiduelle d'oxyde d'alkylène formant, ensemble avec le gaz utilisé pour la phlegmatisation, une phase gazeuse au-dessus de la phase liquide,
(ii) élimine en continu la phase liquide du fond du réacteur via une tubulure d'évacuation et on la recycle via un circuit externe vers la tête du réacteur, au moins un échangeur de chaleur et au moins un pulvérisateur à venturi étant commutés dans le circuit, et
(iii) la phase gazeuse du réacteur agité, qui contient les oxydes d'alkylène non encore transformés, étant dosée via une conduite d'aspiration dans le pulvérisateur à venturi.

2. Procédé selon la revendication 1, **caractérisé en ce qu'**on utilise des composés de départ aptes à l'addition ou à l'insertion d'oxydes d'alkylène, qui sont choisis dans le groupe des alcools, des acides carboxyliques, des esters alkyliques d'acides
carboxyliques, des polyolesters d'acides carboxyliques et des amines.

3. Procédé selon les revendications 1 et/ou 2, **caractérisé en ce qu'**on utilise comme oxydes d'alkylène l'oxyde d'éthylène, l'oxyde de propylène, l'oxyde de butylène ou leurs mélanges.

4. Procédé selon au moins l'une quelconque des revendications 1 à 3, **caractérisé en ce qu'**on réalise la réaction à des températures dans la plage de 50°C à 200°C.

5. Procédé selon au moins l'une quelconque des revendications 1 à 4, **caractérisé en ce qu'**on réalise la réaction à des pressions dans la plage de 1 à 12 bars.

6. Procédé selon au moins l'une quelconque des revendications 1 à 5, **caractérisé en ce qu'**on dissout ou disperse un catalyseur d'alcoxylation dans les substances de départ.

7. Procédé selon au moins l'une quelconque des revendications 1 à 6, **caractérisé en ce qu'**on commute, dans le circuit externe, un échangeur de chaleur en amont du pulvérisateur à venturi.

8. Procédé selon au moins l'une quelconque des revendications 1 à 6, **caractérisé en ce qu'**on commute, dans le circuit externe, un pulvérisateur à venturi en aval ou en amont de l'échangeur de chaleur.

9. Dispositif pour la préparation de produits d'addition d'oxydes d'alkylène, constitué par

(i) un réacteur agité (1) équipé d'un dispositif d'agitation (1a), de dispositifs de dosage pour des produits de réaction (1b) liquides ou gazeux ainsi que d'une tubulure d'évacuation (1c),
(ii) un circuit externe relié au réacteur agité (1), destiné à la circulation par pompage du mélange réactionnel liquide (2), équipé d'une pompe (2a), d'au moins un échangeur de chaleur (2b) et d'au moins un pulvérisateur à venturi (2c), ainsi que
(iii) une conduite d'aspiration (3) à l'aide de laquelle la phase gazeuse est dosée, en sortant du réacteur agité (1) dans le dispositif de mélange du pulvérisateur à venturi (2c).

Abbildung 1

Fließschema

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0853975 A1
- US 5811595 A
- US 6180728 B
- US 6342199 B
- US 6673972 B
- US 6838061 B
- US 20050107643 A1
- EP 0070797 A1
- EP 0419419 B1
- US 5159092 A

**In der Beschreibung aufgeführte Nicht-Patentliteratur**

- *Ind. Eng. Chem. Res.,* 2005, vol. 25, 9482-9489